# EUROPEAN PATENT SPECIFICATION

(11) **EP 2 916 232 B1**
(45) Date of publication and mention of the grant of the patent: **13.12.2017**
(21) Application number: 13852259.4
(22) Date of filing: 18.10.2013
(51) Int. Cl.: G06F 12/16, B60R 16/02, F16F 15/04, G06F 12/06, B60K 6/00

(54) **ELECTRONIC CONTROL DEVICE FOR VEHICLE**
ELEKTRONISCHE STEUERUNGSVORRICHTUNG FÜR EIN FAHRZEUG
DISPOSITIF DE COMMANDE ÉLECTRONIQUE POUR VÉHICULE

(30) Priority: 31.10.2012 JP 2012240244
(43) Date of publication of application: 09.09.2015
(73) Proprietor: Keihin Corporation, Tokyo 163-0539 (JP)
(72) Inventor: IKEGAMI, Yusuke, Shioya-gun Tochigi 329-1233 (JP); ABE, Naoki, Sendai-shi, Miyagi 9800811 (JP)
(74) Representative: v. Bezold & Partner Patentanwälte - PartG mbB
(86) International application number: PCT/JP2013/078301
(87) International publication number: WO 2014/069253

(56) References cited:
- JP-A- 2007 179 460
- JP-A- 2007 179 460
- JP-A- 2008 140 373
- JP-A- 2010 076 622
- JP-A- 2010 076 622
- JP-A- 2010 176 280

## Description

### TECHNICAL FIELD

The present invention relates to an electronic control device for a vehicle.

### BACKGROUND ART

An electronic control device mounted on a vehicle can learn and update control parameters to be used for engine control. By learning the control parameters, cleaning of exhaust gas and improvement in fuel economy can be achieved. In such an electronic control device, a flash memory is used for a device that stores therein the latest learning values of the parameters to realize cost reduction. In a conventional electronic control device, learning values of a plurality of parameters are temporarily stored in a first memory area of the flash memory and, when an update condition of the learning values is satisfied, the learning values are written in a second memory area of the same flash memory, thereby decreasing the number of times of data erasure for each block of the flash memory (see, for example, Patent Document 1). In the flash memory, data erasure is performed for units of blocks each being an aggregate of a plurality of cells to which data is written. Therefore, by decreasing the number of times of data erasure for each block of the flash memory, the service life of the flash memory is prolonged.

As a timing to write a new learning value in the flash memory, there is known a timing of a self-shutdown process after a power switch of the vehicle is turned off. However, if a driver turns on the power switch again during the self-shutdown, a writing process of the learning value is forcibly terminated in the middle of writing data to the flash memory, and the learning value data may be recorded in the flash memory in a corrupted state. Therefore, in the conventional electronic control device, when the power switch is turned on again during self-shutdown, the data writing process is not forcibly terminated and a regular process is performed after the writing process ends (see, for example, Patent Document 2).

### PRIOR ART DOCUMENT

### PATENT DOCUMENTS

Patent Document 1: Japanese Patent Application Laid-open Publication No. 2007-179460 disclosing an electronic device according to the preamble of claim 1
Patent Document 2: Japanese Patent Application Laid-open Publication No. 2008-140373

### SUMMARY OF THE INVENTION

### PROBLEM TO BE SOLVED BY THE INVENTION

In order to reduce the cost of the electronic control device, elimination of a self-shut relay to be used in the self-shutdown process has been examined. However, if the self-shut relay is eliminated, supply of power to the electronic control device is immediately stopped at the time of power off and thus the learning values cannot be written in the flash memory.

Furthermore, if a power source is turned off during the writing process of a learning value, the learning value may be recorded in the flash memory in a corrupted state. If a power on/off operation is further repeated in this case, corrupted learning values are continuously stored in the flash memory. If all the learning values in the block of the flash memory are corrupted, there is no normal learning value in the block and thus it is difficult to control an engine.

The present invention has been achieved in view of the above problems, and an object of the present invention is to provide an electronic control device that can obtain learning values of control parameters accurately even if a power on/off operation is repeated.

### MEANS FOR SOLVING THE PROBLEM

The present invention is to provide an electronic control device for a vehicle, the device comprising a flash memory that can store therein respective learning values of a plurality of control parameters and configured to execute predetermined control using the learning values upon reception of supply of power and to be able to store therein the learning values corresponding to the control parameters, respectively, as a set of learning data by adding the learning values newly calculated while power is supplied in a predetermined block of the flash memory, wherein when there is no residual storage capacity to be used space in the predetermined block at a start of the supply of power and the set of learning data is not prepared completely in the predetermined block, data in the predetermined block is erased.

The present invention also provides the electronic control device for a vehicle according to claim 1, wherein when there is not the set of learning data in the predetermined block at a start of the supply of power, missing one of the learning values in the set of learning data is obtained from another block other than the predetermined block, and the missing learning value is written in the predetermined block.

### EFFECT OF THE INVENTION

According to the present invention, when a set of learning data cannot be obtained in a state where there is no residual storage capacity to be used in a currently-used block of a flash memory, data in the block is erased. Accordingly, it can be prevented that the block is filled with indeterminate data, thereby enabling to reliably perform updating of the leaning values and control using the learning values.

### BRIEF DESCRIPTION OF THE DRAWINGS

[FIG. 1] FIG. 1 is a block diagram showing an electronic control device for a vehicle according to an embodiment of the present invention.
[FIG. 2] FIG. 2 is a flowchart for explaining an updating process of a learning value performed in the electronic control device for a vehicle according to the present embodiment.
[FIG. 3A] FIG. 3A is an explanatory diagram of an example of data management in a flash memory of the electronic control device for a vehicle according to the present embodiment.
[FIG. 3B] FIG. 3B is an explanatory diagram of an example of data management in a flash memory of the electronic control device for a vehicle according to the present embodiment.
[FIG. 3C] FIG. 3C is an explanatory diagram of an example of data management in a flash memory of the electronic control device for a vehicle according to the present embodiment.
[FIG. 4] FIG. 4 is a flowchart for explaining an initializing process of a learning value performed in the electronic control device for a vehicle according to the present embodiment.

### EMBODIMENT FOR CARRYING OUT THE INVENTION

Embodiments of the present invention are explained below in detail.

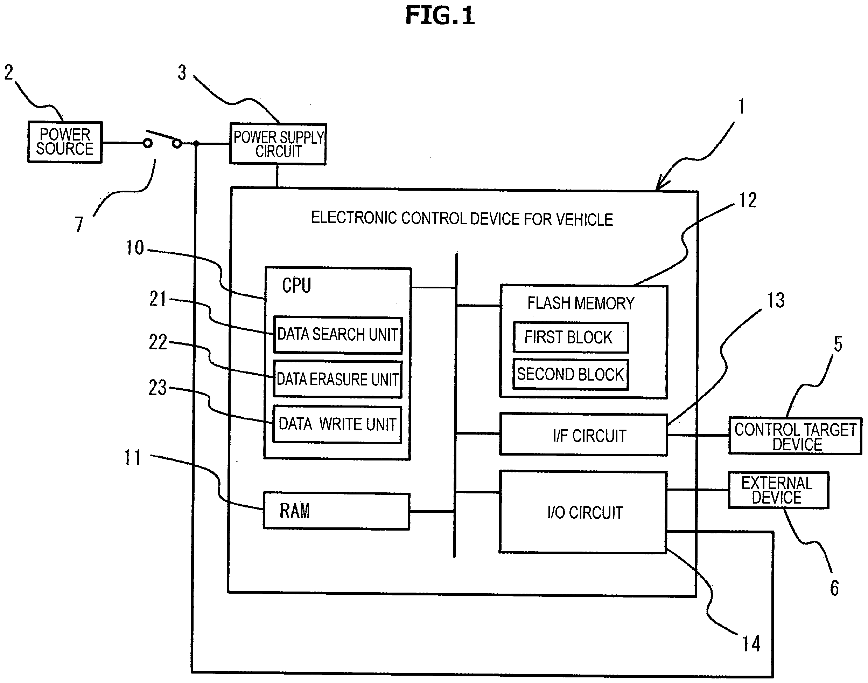

As shown in a block diagram of FIG. 1, an electronic control device 1 for a vehicle is configured to receive supply of power from a power source 2 via a power supply circuit 3 and to control a control target device 5. Specifically, the electronic control device 1 for a vehicle is configured to include a CPU (Central Processing Unit) 10, a RAM (Random Access Memory) 11, a flash memory 12 being a non-volatile storage device, an I/F (interface) circuit 13 connected to the control target device 5, and an I/O (input/output) device 14 connected to an external device 6 such as a sensor or an actuator. The power source 2 can be a battery or a power generator. A switch 7 is provided between the power source 2 and the power supply circuit 3, and on/off of the switch 7 is changed according to a command from the CPU 10.

The CPU 10 can be divided into a data search unit 21 that searches for learning values of control parameters stored in the flash memory 12, a data erasure unit 22 that erases data in a predetermined block of the flash memory 12, and a data write unit 23 that writes learning values in the flash memory 12 and writes initial values of the control parameters therein, which are characteristic functions of the present embodiment. An example of the control parameters is a fully closed value of a throttle valve of an engine. The learning values of the control parameters include, for example, a fully closed value after deterioration with age and a shift amount at a time when the fully closed value of the throttle valve has shifted due to deterioration with age. The type and number of the control parameters and data formats of the learning values are not limited thereto.

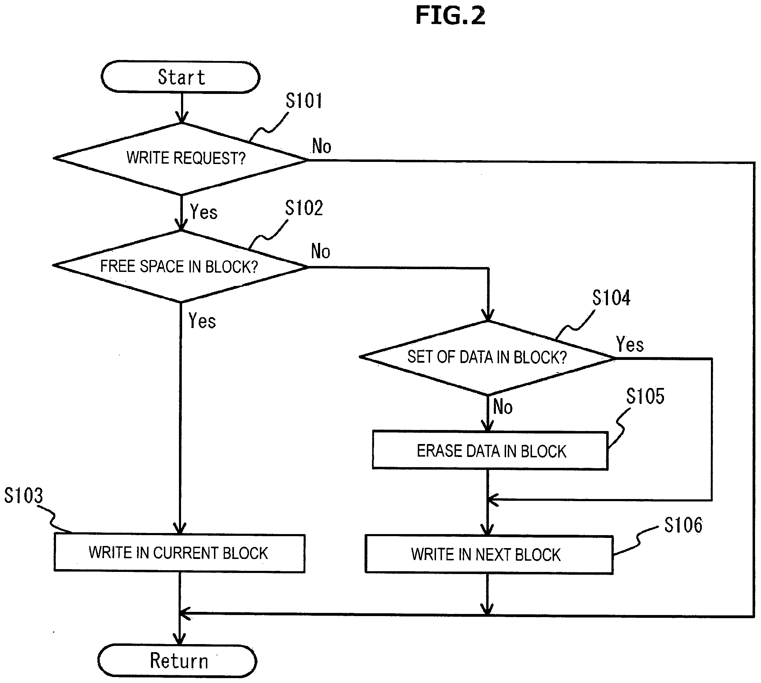

Processes performed by the electronic control device 1 for a vehicle are explained next with reference to a flowchart of FIG. 2.

First, at Step S101, the data write unit 23 of the CPU 10 checks if there is a write request of a learning value. The write request is output, for example, at a timing when power supply to the electronic control device 1 for a vehicle is started, that is, when the switch 7 is turned on. When there is no write request (NO at Step S101), the process at this time ends.

On the other hand, when there is a write request (YES at Step S101), the process proceeds to Step S102 where the data write unit 23 accesses the flash memory 12 to check if there is a residual storage capacity to be used in a currently-used block of the flash memory 12. When there is a residual storage capacity to be used, the process proceeds to Step S103 (YES at Step S102) where the data write unit 23 sequentially writes new learning values in a free cell in the current block of the flash memory 12. Subsequently, the process at this time ends.

On the other hand, when there is no residual storage capacity to be used in the currently-used block of the flash memory 12 at Step S102, the process proceeds to Step S104. At Step S104, the data search unit 21 checks if there is a set of learning values (a set of learning data) in the currently-used block. As for the set of learning values, for example, when the number of control parameters required for the control of the control target device 5 is three, three learning values corresponding to the control parameters are designated as the set of learning values. If data of at least one of the three learning values is corrupted, the data search unit 21 determines that the set of learning values is not prepared completely.

The learning values are sequentially stored in the cells of the flash memory 12 with the learning value data itself being associated with ID (identification) data that specifies the types of the learning values. In order to increase reliability of data, the learning value data itself is stored in the flash memory 12 in such a manner that a plurality of pieces of same data, for example, three pieces of same data are stored therein. In this case, as the corrupted learning value data, such a case is assumed that the ID data is different from expected data or that three data values do not completely agree. Examples of a cause of the corrupted learning value data are a case where the power source 2 is turned off during write of the learning values and a case where the on/off operation of the power source 2 is repeated.

When a set of learning data is not prepared completely, the data search unit 21 judges that an error has occurred in a writing process of the learning values to the cells of the flash memory 12, thereby causing corrupted data. The process then proceeds to Step S105 where the data erasure unit 22 erases all the pieces of data in the currently-used block of the flash memory 12. Next, at Step S106, the learning values are written in the next block and the process ends. On the other hand, when a set of learning data is prepared completely in the currently-used block of the flash memory 12 at Step S104, the process at Step S106 is performed and then the process ends.

The next block means a block to which write of data can be performed next to a block having no more residual storage capacity to be used. For example, a block from which data has been erased at Step S105 and a block in which the learning values are written at Step S106 can be the same.

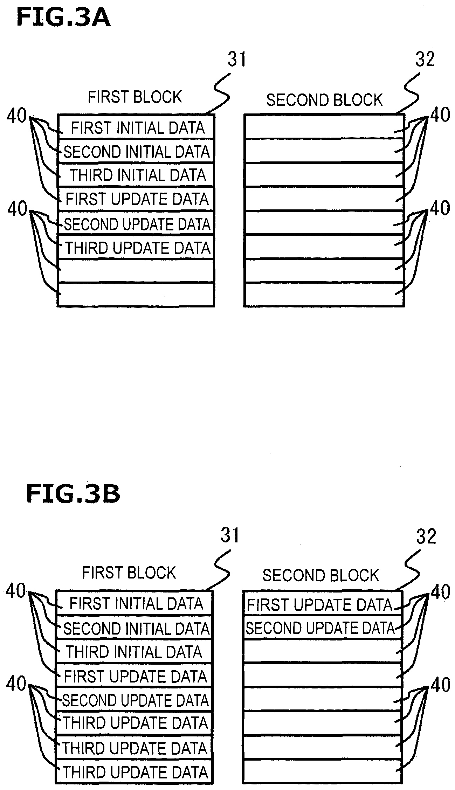

A specific example of the processes described above is explained with reference to FIGS. 3A to 3C. In FIGS. 3A to 3C, two blocks 31 and 32 in the flash memory 12 are shown. In each of the blocks 31 and 32, eight cells 40 are prepared so as to be able to write data therein. Regarding the learning values, three pieces of data, for example, first initial data, second initial data, and third initial data are assumed to be a set of data. Three pieces of update data, that is, first update data, second update data, and third update data are also a set of data. Further, it is assumed that data is written sequentially from the top cell 40 in each of the blocks 31 and 32. The number of blocks and the number of cells 40 in one block are not limited to those shown in FIGS. 3A to 3C.

In FIG. 3A, in the first block 31 of the flash memory 12, a set of initial data, and respective ones of first update data, second update data, and third update data as the learning values are stored. This indicates that the learning values are updated once from the first to third initial data, respectively. In this case, because there are two free cells 40 in the first block 31, the next update data will be written in the first block 31.

In FIG. 3B, data is written in all the cells 40 of the first block 31, and data is written in some of the cells 40 of the second block 32. In the first block 31, three pieces of third update data are stored. This is because while first two learning values have been updated once from the initial data, only the third learning value has been updated three times from the initial data. After data has been written in each cell 40 of the first block 31, there is no residual storage capacity to be used in the block. Therefore, the data search unit 21 checks if there is a set of learning values in the first block 31. In this case, there is a set of learning values including the first to third update data. Therefore, the update data of the learning values, for example, the first update data and the second update data are then written sequentially in the cells 40 of the second block 32.

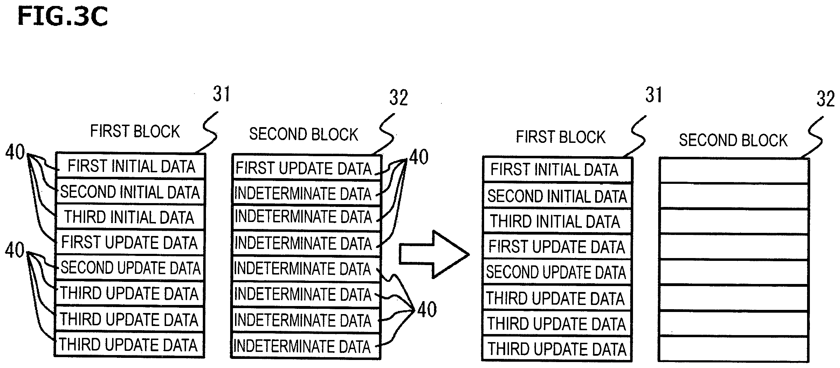

In the second block 32 shown in FIG. 3C, the first update data of the first learning value is stored in the first cell while indeterminate data is stored in other cells 40. The indeterminate data means data corrupted due to the power on/off operation or data for which a normal end of data write cannot be confirmed.

When on/off of the power source 2 is repeated at a timing of writing the next update data after the first update data is written in the first cell 40 of the second block 32, indeterminate data is written in a free cell 40 in the second block 32. The indeterminate data is written until there is no free cell 40 in the second block 32. After data has been written in all the cells 40 in the second block 32, the data search unit 21 checks if there is a set of learning values in the block 32.

In this case, because there is only one first update data in the second block 32 and a set of learning values is not prepared completely, the data erasure unit 22 erases all pieces of data in the second block 32. Learning values are then written anew in the second block 32 after data erasure.

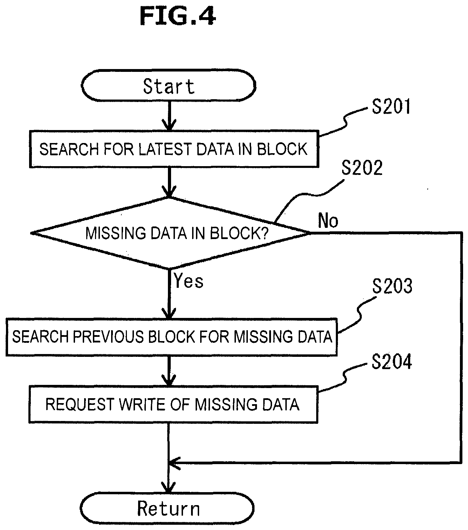

There are cases where a set of learning values is not in the blocks 31 and 32 having a residual storage capacity to be used at times such as when the power source 2 is turned on. In these cases, a data initializing process is performed, so that a set of learning values can be obtained in one of the blocks 31 and 32. Details of the data initializing process are explained below with reference to a flowchart of FIG. 4.

First, at Step S201, the data search unit 21 searches for latest data in a currently-used block of the flash memory 12. At Step S202, the data search unit 21 checks if there is missing data in a set of learning values. When there is no missing data, the data search unit 21 ends the process. The learning values are then updated in the flash memory 12 according to the flowchart in FIG. 2.

On the other hand, when a set of learning values is not prepared completely in the block 31 or 32 currently used, the process proceeds to Step S203 where the data search unit 21 searches the block 31 or 32 one block before for missing data. At Step S204, the data write unit 23 writes the missing data in a free cell 40 in the block 31 or 32 currently used.

For example, in the example shown in FIG. 3B, there are the first update data and the second update data in the second block 32 currently used. However, because there is no third update data, a set of learning values is not prepared completely. Therefore, the third update data is extracted from the previous first block 31 and written in the third cell 40 of the second block 32. Accordingly, a set of learning values becomes prepared completely. The data initializing process can be performed also, for example, when a set of learning values is not prepared completely although there is a free cell 40 in the block 31 or 32, as well as at the timing when the power source 2 is turned on.

When the control target device 5 is to be controlled, a set of learning values stored in the flash memory 12 is expanded in the RAM 11, and the CPU 10 creates a command value for the control target device 5. The command value is output to the control target device 5 via the I/F circuit 13. A control result of the control target device 5 is fed back to the electronic control device 1 for a vehicle as a detection result from the external device 6 such as a sensor. The CPU 10 calculates a new learning value of the control parameter based on the fed back information as needed. The calculated new learning value is stored in the flash memory 12 by the data write unit 23 in association with the ID data, which characterizes the type of the learning value.

As described above, in the present embodiment, when there is no residual storage capacity to be used in the currently-used block 31 or 32 of the flash memory 12 and a set of learning values cannot be obtained, data in the block 31 or 32 is erased. Accordingly, it can be prevented that the cells 40 in the block 31 or 32 are all filled with indeterminate data. By erasing all pieces of data in the block 31 or 32, the electronic control device 1 can refer to a normal set of learning values in the other block 31 or 32. Therefore, even if a part of data becomes defective, the control target device 5 can be controlled reliably.

When there is a residual storage capacity to be used in the block 31 or 32, even if a set of learning values is not prepared completely, missing data is copied from the previous block 31 or 32 so that a set of learning values becomes prepared completely. Accordingly, a loss in the learning values can be prevented and the control target device 5 can be reliably controlled.

The present invention is not limited to the above embodiment and can be variously modified without departing from the spirit of the invention. For example, the electronic control device 1 can be configured to output a write request at a timing other than a power-on timing.

### Explanation of reference numerals

- 1: electronic control device
- 2: power source
- 5: control target device
- 10: CPU
- 12: flash memory
- 21: data search unit
- 22: data erasure unit
- 23: data write unit
- 31: first block
- 32: second block

## Claims

1. An electronic control device (1) for a vehicle, the device comprising a flash memory (12) that can store therein respective learning values of a plurality of control parameters and configured to execute predetermined control using the learning values upon reception of supply of power and to be able to store therein the learning values corresponding to the control parameters, respectively, as a set of learning data by adding the learning values newly calculated while power is supplied in a predetermined block (31, 32) of the flash memory (12), **characterized in that**
when there is no residual storage capacity to be used in the predetermined block (31, 32) at a start of the supply of power and the set of learning data is not prepared completely in the predetermined block (31, 32), data in the predetermined block (31, 32) is erased.

2. The electronic control device for a vehicle according to claim 1, wherein when there is not the set of learning data in the predetermined block (31, 32) at a start of the supply of power, missing one of the learning values in the set of learning data is obtained from another block (31, 32) other than the predetermined block (31, 32), and the missing learning value is written in the predetermined block (31, 32).

## Patentansprüche

1. Elektronische Steuervorrichtung (1) für ein Fahrzeug, wobei die Vorrichtung einen Flash-Speicher (12) umfasst, der darin entsprechende Lernwerte einer Vielzahl von Steuerparametern speichern kann und konfiguriert ist, auf einen Empfang einer Energiezufuhr hin eine vorbestimmte Steuerung unter Verwendung der Lernwerte auszuführen und in der Lage zu sein, darin die Lernwerte jeweils entsprechend den Steuerparametern als einen Satz von Lerndaten zu speichern, in dem die Lernwerte, die neu berechnet werden, während Energie zugeführt wird, in einen vorbestimmten Block (31, 32) des Flash-Speichers (12) geliefert werden,
**dadurch gekennzeichnet, dass**
wenn keine Rest-Speicherkapazität, die in dem vorbestimmten Block (31, 32) verwendet werden soll, bei einem Beginn der Energiezufuhr vorhanden ist und der Satz von Lerndaten nicht vollständig in dem vorbestimmten Block (31, 32) vorbereitet ist, Daten in dem vorbestimmten Block (31, 32) gelöscht werden.

2. Elektronische Steuervorrichtung für ein Fahrzeug gemäß Anspruch 1, wobei, wenn der Satz von Lerndaten in dem vorbestimmten Block (31, 32) zum Beginn der Energiezufuhr nicht vorhanden ist, ein fehlender Wert der Lernwerte in dem Satz von Lerndaten von einem anderen Block (31, 32), der anders als der vorbestimmte Block (31, 32) ist, erhalten wird, und der fehlende Lernwert in den vorbestimmten Block (31, 32) geschrieben wird.

## Revendications

1. Dispositif de commande électronique (1) pour un véhicule, le dispositif comprenant une mémoire flash (12) qui peut stocker en son sein des valeurs d'apprentissage respectives d'une pluralité de paramètres de commande et configuré pour exécuter une commande prédéterminée en utilisant les valeurs d'apprentissage lors de la réception d'une alimentation en électricité et être capable de stocker en son sein des valeurs d'apprentissage correspondant aux paramètres de commande, respectivement, tel qu'un jeu de données d'apprentissage en ajoutant une valeur d'apprentissage nouvellement calculée pendant que l'électricité est fournie dans un bloc prédéterminé (31, 32) de la mémoire flash (12), **caractérisé en ce que**
lorsqu'il n'y a pas de capacité de stockage résiduelle à utiliser dans le bloc prédéterminé (31, 32) au début de l'alimentation en électricité et que le jeu de données d'apprentissage n'est pas complètement préparé dans le bloc prédéterminé (31, 32), des données dans le bloc prédéterminé (31, 32) sont effacées.

2. Dispositif de commande électronique pour un véhicule selon la revendication 1, dans lequel, lorsqu'il n'y a pas le jeu de données d'apprentissage dans le bloc prédéterminé (31, 32) au début de l'alimentation en électricité, l'absence de l'une des valeurs d'apprentissage dans le jeu de données d'apprentissage est obtenue à partir d'un autre bloc (31, 32) autre que le bloc prédéterminé (31, 32), et la valeur d'apprentissage absente est écrite dans le bloc prédéterminé (31, 32).
